# EUROPÄISCHE PATENTSCHRIFT

(11) **EP 2 189 027 B1**
(45) Veröffentlichungstag und Bekanntmachung des Hinweises auf die Patenterteilung: **05.01.2011**
(21) Anmeldenummer: 08785500.3
(22) Anmeldetag: 12.08.2008
(51) Int. Cl.: H04W 36/30

(54) **VERFAHREN ZUR VERMEIDUNG VON PING- PONG-HAND-OVER IN MOBILFUNKNETZEN**
METHOD FOR PREVENTING PING-PONG HANDOVER IN MOBILE RADIO NETWORKS
PROCÉDÉ POUR ÉVITER LES TRANSFERTS EN PING-PONG DANS LES RÉSEAUX DE RADIOTÉLÉPHONIE MOBILE

(30) Priorität: 13.08.2007 DE 102007038099
(43) Veröffentlichungstag der Anmeldung: 26.05.2010
(73) Patentinhaber: T-Mobile International AG, 53227 Bonn (DE)
(72) Erfinder: NEUBACHER, Andreas, A-2100 Korneuburg (AT)
(74) Vertreter: Riebling, Peter
(86) Internationale Anmeldenummer: PCT/EP2008/006621
(87) Internationale Veröffentlichungsnummer: WO 2009/021711

(56) Entgegenhaltungen:
- EP-A- 1 229 754
- WO-A-03/105520
- US-A1- 2006 003 768

## Beschreibung

Die Erfindung betrifft ein Verfahren zur Vermeidung von Ping-Pong-Hand-Over in Mobilfunknetzen, speziell in Netzwerken mit Netzwerkelementen von unterschiedlichen Herstellern, nach dem Oberbegriff des Patentanspruchs 1.

Unter Ping-Pong-Hand-Over sind mehrmalige unerwünschte Übergaben einer Mobilfunkstation (z.B. Handy) im Connected/Active Mode (Verbindung aufgebaut) von einer Quell-Basisstation zu einer Ziel-Basisstation zu verstehen.

In bestehenden Mobilfunksystemen z.B. 2G (GSM - Global System for Mobile Communication) und 3G (UMTS - Universal Mode Telecommunication System), sind zentrale Netzwerkkomponenten, wie z.B. der Base Station Controller (BSC) oder der Radio Networt Controller (RNC) für die Entscheidung der Übergabe einer Mobilfunkstation im Connected/Active Mode von einer Basisstation zur anderen (=Hand-Over) verantwortlich.

Die Entscheidung, einen Hand-Over einzuleiten, wird durch einen herstellerspezifischen Hand-Over-Algorithmus im BSC oder RNC auf Grund von Messergebnissen (measurement reports) der Mobilstationen bzw. der Basisstationen eingeleitet.

Die Empfangsfeldstärke an der Mobilfunkstation, sowie daraus abgeleitete Größen wie z.B. das Powerbudget, beeinflusst hauptsächlich die Entscheidung, ob ein Hand-Over eingeleitet werden soll. Die Messungen der Empfangsfeldstärke z.B. in 3G und in 2G die die Hand-Over-Entscheidungen beeinflussen, sind hinlänglich bekannt.

Auf Grund des sich zeitlich und räumlich stark ändernden Funkfeldes ist es notwendig, Messwerte - die Empfangsfeldstärke an der Mobilfunkstation - mit einer entsprechenden Hysterese bei der Hand-Over-Entscheidung zu berücksichtigen.

Ein überdurchschnittlich hohes Hand-Over-Aufkommen einer Mobilstation zwischen zwei Basisstationen, lässt darauf schließen, dass ein Ping-Pong-Hand-Over verhalten zwischen diesen zwei Basisstationen vorliegt.

Bislang wird die Höhe der einzustellenden Hysterese zuerst auf einen Standard Wert (default Wert) eingestellt und in weiterer Folge manuell optimiert.

Bislang wurde Ping-Pong Hand-Over-Verhalten nur indirekt durch ein unübliches hohes Hand-Over-Aufkommen bzw. durch Kundenbeschwerden über Verbindungsabbrüche bzw. mangelnde Qualität identifiziert.

Erst durch eine nachfolgende Messfahrt konnte die genaue Ursache für die Qualitätsprobleme bzw. das hohe Hand-Over-Aufkommen genau identifiziert werden. Wurde festgestellt, dass die Qualitätsprobleme bzw. das hohe Hand-Over Aufkommen durch Ping-Pong Hand Over verursacht wurden, sind die Handover Schwellwerte, bzw. die Hysterese in den verantworlichen Netzwerkelementen entsprechend angepasst worden.

In dem gerade in der Entwicklung befindlichen Mobilfunksystem LTE (Long Term Evolution), auch Super 3G oder 3GPP genannt, wird mit Wegfall eines zentralen Steuerelementes und der dezentralen Platzierung der Steuerung der Funkschnittstelle (RRM = Radio Resource Management) die Wahrscheinlichkeit unerwünschter Ping-Pong-Hand-Over zwischen zwei Basisstationen (z.B. eNodeB) höher und werden damit zur technischen Herausforderung.

Noch größer werden die zu erwartenden Probleme im Falle von aneinander grenzenden eNodeB unterschiedlicher Hersteller, da hier in der Regel auch die verwendeten Entscheidungsalgorithmen unterschiedlich sein werden.

US 2006/0003768 A1 offenbart ein Verfahren zur Vermeidung von Ping-Pong-Hand-Over in Mobilfunknetzen mit einer Vielzahl von Funkzelle, definiert durch zueinander beabstandete stationäre Basisstationen, sowie mit in deren Sende- und Empfangsbereich befindlichen stationären und/oder mobilen Mobilfunkstationen wie z.B. Mobilfunktelefonen. Mehrmalige unerwünschte Übergaben einer Mobilfunkstation in ihrem Connected/Active Mode bei aufgebauter Verbindung von einer Quell-Basisstation zu einer Ziel-Basisstation werden durch ein Hand-Over-Verfahren vermieden, wobei zwischen den Mobilfunkstationen und den Basisstationen Systemnachrichten auch zur Einleitung des Hand-Over-Verfahrens übermittelt werden. In den Systemnachrichten zur Einleitung des Hand-Over-Verfahrens werden Informationen zu Hand-Over-Verfahren übermittelt, und mittels dieser Informationen werden optimale Betriebs-Parameter der Mobilfunkstationen und/oder mindestens einer der beteiligten Basisstationen automatisch durch die Mobilfunkstationen und/oder durch mindestens eine der beteiligten Basisstationen ermittelt und eingestellt.

Aufgabe der vorliegenden Erfindung ist es daher, ausgehend vom eingangs genannten Stand der Technik, ein Verfahren zur Vermeidung von Ping-Pong-Hand-Over in Mobilfunknetzen, speziell in Netzwerken mit Netzwerkelementen von unterschiedlichen Herstellern, derart weiter zu bilden, dass die Parameter, insbesondere die Hysterese der Empfangsfeldstärke, des Mobilfunkgeräts und/oder der Basisstationen, zur Vermeidung von Ping-Pong-Hand-Over automatisch selbsttätig eingestellt werden, ohne dass kostenaufwändige "manuellen" Messfahrten benötigt werden.

Kennzeichnend für die Erfindung ist, dass in den entsprechenden Systemnachrichten zur Einleitung des Hand-Over die entsprechende historische Information zu bereits durchgeführten Hand-Over übermittelt wird. Mittels dieser historischen Information werden die optimalen Parameter, insbesondere die Hysterese der Empfangsfeldstärke des Mobilfunkgeräts, automatisch durch das System ermittelt und eingestellt.

Vorteil ist, dass damit manuelle Optimierungsmaßnahmen reduziert oder gar vollkommen unnötig werden und Kosten eingespart werden können. Damit ist es auch möglich, dass sich das Mobilfunksystem selbst optimiert, ohne dass die entsprechenden herstellerspezifischen Entscheidungsalgorithmen (RRM-Algorithmen) offengelegt werden müssen.

Um ein selbstoptimierendes Verfahren zu implementieren, ist es notwendig:
Zu erkennen, dass ein Ping-Pong-Hand-Over-Verhalten auftritt. Gegenmaßnahmen zur Vermeidung von Ping-Pong-Hand-Over zu treffen, wie z.B. Anpassung von Hysteresewerten, Hand-Over-Schwellen, sowie allgemein RRM-Parameter.

Ein Ping-Pong-Hand-Over kann an Hand der Daten der vorangegangenen Hand-Over erkannt werden.

Durch zusätzliche Übermittlung der Informationen über die dem aktuellen Hand-Over vorangegangenen Hand-Over, ist es der Ziel-Basisstation (z.B. eNodeB) möglich, zu erkennen, ob ein Ping-Pong-Hand-Over vorliegt, und entsprechend Gegenmaßnahmen zur Vermeidung zukünftiger Ping-Pong-Hand-Over zu ergreifen.

Informationen zum Erkennen eines Ping-Pong-Hand-Over sind z.B.:
Kennungen der zuletzt das Hand-Over anfordernde Basisstationen. Grund für die Hand-Over-Anforderungen einer Basisstation, wie z.B. Load Feldstärke, Powerbudget, Qualität, Distanz etc.) und die Häufigkeit dieser Hand-Over-Anforderungen pro Zeiteinheit.

Werden diese Informationen zusätzlich zur Hand-Over-Anforderung in den entsprechenden System-Meldungen eines Mobilfunk-Netzes übertragen, ist es den in den Netzwerkelementen implementierten Entscheidungsalgorithmen möglich, Ping-Pong-Hand-Over zu erkennen und ihre Konfigurationsparameter, z.B. die Hysterese, oder Hand-Over-Schwellen anzupassen, solange bis keine Ping-Pong-Hand-Over mehr auftreten.

Im Folgenden wird die Erfindung anhand von Zeichnungen näher erläutert, welche weitere Merkmale und Vorteile der Erfindung veranschaulichen sollen.

Es zeigt:
Figur 1: Prinzipschaubild der Feldstärken zwischen zwei benachbarten Basisstationen mit zu geringer Hysterese der Empfangs-Feldstärke des zwischen den Basisstationen befindlichen Mobilfunkgeräts nach dem Stand der Technik;
Figur 2: Prinzipschaubild der Feldstärken zwischen zwei benachbarten Basisstationen mit optimierter Hysterese der Empfangs-Feldstärke des zwischen den Basisstationen befindlichen Mobilfunkgeräts gemäß der vorliegenden Erfindung.

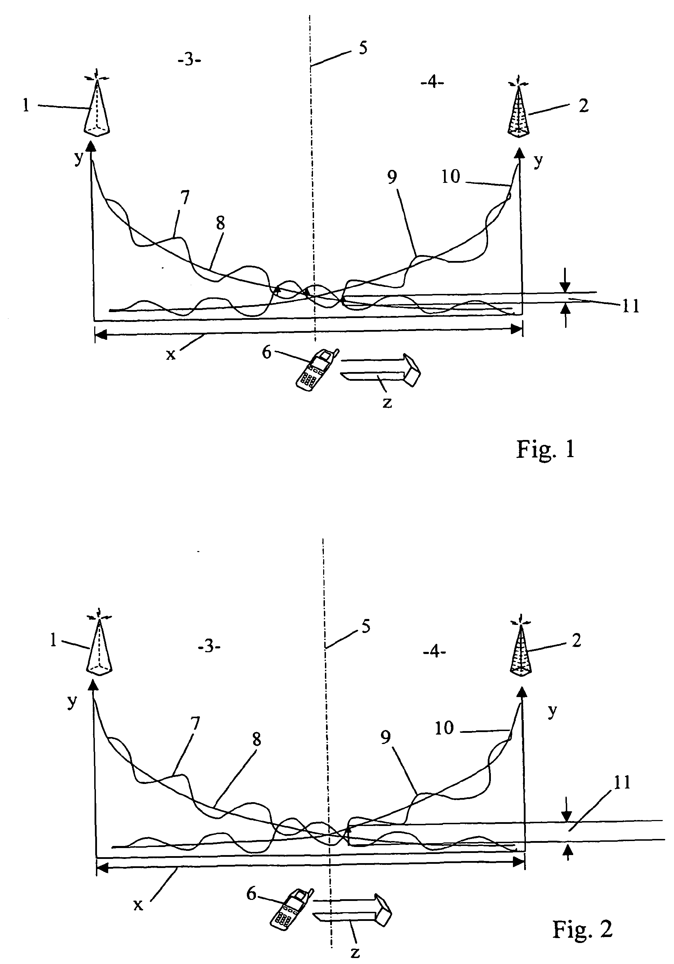

Figur 1 zeigt ein Feldstärken-Diagramm nach dem Stand der Technik zwischen zwei aneinander grenzenden und eine Abstand X zueinander einnehmenden Basisstationen 1, 2, welche jeweils Funkzellen 3, 4 definieren, in deren Grenzbereich 5 sich ein Mobilfunkgerät 6 in Form eines Handys befindet.

Die von der linken Basisstation 1 abgestrahlte Feldstärke ist als tatsächlich vom Mobilfunkgerät 6 empfangbaren Feldstärke 7 in Form einer nicht-periodischen Wellenlinie dargestellt, wobei die stetig von links nach rechts fallende Kurve 8, dem Mittelwert der Empfangs-Feldstärke 7 entspricht.

Gleiches gilt für die rechte Basisstation 2, deren abgestrahlte Feldstärke als tatsächlich vom Mobilfunkgerät 6 empfangbaren Feldstärke 9 in Form einer nicht-periodischen Wellenlinie dargestellt ist, wobei die stetig von links nach rechts steigende Kurve 10, dem Mittelwert der Empfangs-Feldstärke 9 entspricht.

An der Grenze 5 zwischen den beiden Funkzellen 3, 4 der beiden Basisstationen 1, 2 befindet sich nun das Mobilfunkgerät 6, wobei dort die beiden Mittelwerte 8, 10 der Empfangs-Feldstärken 7, 9 etwa den gleichen Betrag Y aufweisen. In diesem Grenzbereich mit etwa gleichen Mittelwerte 8, 10 der Empfangs-Feldstärken 7, 9 wird das an sich bekannte Hand-Over Verfahren durchgeführt, so dass je nach Auslösekriterien (z.B. Hand-Over-Schwellwert mit Hysterese der Empfangs-Feldstärken 7, 9) des Mobilfunkgeräts 6 dann von der einen Basisstation 1, 2 in die andere Basisstation 2, 1 umgeschaltet wird und sich damit das Mobilfunkgerät 6 in der einen Funkzelle 3, 4 abmeldete und in der anderen Funkzelle 4, 3 anmeldete.

Um zu vermeiden, dass das Mobilfunkgerät 6 im Grenzbereich 5 ständig von der einen zur anderen Basisstation 1, 2 und damit Funkzelle 3, 4 wechselt, sind eben gewisse Auslösekriterien vordefiniert, z.B. als Hand-Over-Schwellwert 11 mit Hysterese der Empfangs-Feldstärken 7, 9 des Mobilfunkgeräts 6, hier dargestellt als nach oben zeigende Pfeile, welche Hysterese 11 die Differenz der Empfangs-Feldstärken 7, 9 des Mobilfunkgeräts 6 ist.

Wird eine vordefinierte Pegeldifferenz zwischen den beiden Empfangs-Feldstärken 7, 9 des Mobilfunkgeräts 6, ausgehend von den beiden Basisstationen 1, 2 nicht überschritten, dann bleibt das Mobilfunkgerät 6 bei der angemeldeten Basisstation 1 oder 2 und kein Hand-Over wird durchgeführt. Wird nun die Pegeldifferenz überschitten, erfolgt ein Hand-Over des Mobilfunkgeräts 6 von der angemeldeten Basisstation 1 oder 2 zu deren benachbarten Basisstation 2 oder 1, die eine höhere Empfangs-Feldstärke 9 oder 7 aufweist.

Alternativ oder zusätzlich zum Hand-Over-Kriterium Hand-Over-Schwellwert 11 mit Hysterese können auch die Absolutwerte der Empfangs-Feldstärken 7, 9 herangezogen werden, und/oder allgemeine RRM-Parameter (Radio Ressource Management Parameter).

Figur 2 zeigt nun die Verteilung der Empfangs-Feldstärken 7, 9 des Mobilfunkgeräts 6 zwischen den beiden Basisstationen 1, 2 nach der Erfindung, wobei der Hand-Over-Schwellwert 11 mit Hysterese, d.h. die Pegeldifferenz plus minus Hysteresetoleranz zwischen den beiden Empfangs-Feldstärken 7, 9, wesentlich größer ist, als bei Figur 1 also bereits einen optimierten Wert aufweist.

Die beispielhafte Bewegungsrichtung des Mobilfunkgeräts 6 von der linken Basisstation 1 zur rechten Basisstation 2, also von der linken Funkzelle 3 in die rechte Funkzelle 4, ist in beiden Figuren 1 und 2 mit dem Bezugszeichen "Z" versehen. Die Bewegungsrichtung des Mobilfunkgeräts 6 kann natürlich auch entgegengesetzt zur Bewegungsrichtung Z sein, so dass die Bewegung von rechts nach links aus der rechten Funkzelle 4 in die linke Funkzelle 3 erfolgt, von der rechten Basisstation 2 zur linken Basisstation 1.

## Patentansprüche

1. Verfahren zur Vermeidung von Ping-Pong-Hand-Over in Mobilfunknetzen mit einer Vielzahl von Funkzellen (3, 4), definiert durch zueinander beabstandete stationäre Basisstationen (1, 2), sowie mit in deren Sende- und Empfangsbereich befindlichen stationären und/oder mobilen Mobilfunkstationen (6) wie z.B. Mobilfunktelefonen, wobei mehrmalige unerwünschte Übergaben einer Mobilfunkstation (6) in ihrem Connected/Active Mode bei aufgebauter Verbindung von einer Quell-Basisstation (1 oder 2) zu einer Ziel-Basisstation (2 oder 1) durch ein Hand-Over-Verfahren vermieden werden, und zwischen den Mobilfunkstationen (6) und den Basisstationen (1, 2) Systemnachrichten auch zur Einleitung des Hand-Over-Verfahrens übermittelt werden, wobei in den Systemnachrichten zur Einleitung des Hand-Over-Verfahrens Informationen zu Hand-Over-Verfahren übermittelt werden, und mittels dieser Informationen optimale Betriebs-Parameter der Mobilfunkstationen (6) und/oder mindestens einer der beteiligten Basisstationen (1, 2) automatisch durch die Mobilfunkstationen (6) und/oder durch mindestens eine der beteiligten Basisstationen (1, 2) ermittelt und eingestellt werden, **dadurch gekennzeichnet, dass** als Informationen historische Informationen zu bereits durchgeführten Hand-Over-Verfahren verwendet werden, wobei die historischen Informationen den Grund für die Hand-Over-Anforderungen einer Basisstation (1, 2), wie Empfangs- und/oder Sende-Feldstärke (7, 9) der Mobilfunkstation (6) und/oder der Basisstationen 1 2 und die Häufigkeit der Hand-Over-Anforderungen einer Basisstation pro Zeiteinheit enthalten, und dass die optimalen Betriebs-Parameter der Mobilfunkstationen (6) und/oder mindestens einer der beteiligten Basisstationen (1, 2), Differenzwerte (11) mit Hysterese-Toleranzen der Empfangs- und/oder Sendefeldstärken (7, 9) der Mobilfunkstationen (6) und/oder mindestens einer der beteiligten Basisstationen (1, 2) enthalten, wobei die optimalen Hysterese-Toleranzen der Mobilfunkstationen (6) eingestellt werden.

2. Verfahren nach Anspruch 1, **dadurch gekennzeichnet, dass** die historischen Informationen die Kennungen der zuletzt das Hand-Over anfordernde Basisstation (1 oder 2) enthält.

3. Verfahren nach einem der Ansprüche 1 oder 2, **dadurch gekennzeichnet, dass** die optimalen Betriebs-Parameter der Mobilfunkstationen (6) und/oder mindestens einer der beteiligten Basisstationen (1, 2) vordefinierte obere und/oder untere Absolutwerte der Empfangs- und/oder Sendefeldstärken (7, 9) enthalten, die insbesondere in den entsprechenden Hand-Over auslösenden Netzelementen (6) eingestellt werden.

4. Verfahren nach einem der Ansprüche 1 bis 3, **dadurch gekennzeichnet, dass** die optimalen Betriebs-Parameter der Mobilfunkstationen (6) RRM-Parameter (Radio Ressource Management) enthalten, die insbesondere durch die Mobilfunkstationen (6) eingestellt werden.

5. Verfahren nach einem der Ansprüche 1 bis 4, **dadurch gekennzeichnet, dass** das Mobilfunknetz (3, 4) ein GSM-, UMTS- oder LTE-Mobilfunknetz oder gleichwertiges Mobilfunknetz z.B. WiMAX ist.

6. Verfahren nach einem der Ansprüche 1 bis 5, **dadurch gekennzeichnet, dass** das Verfahren in Netzwerken (3, 4) mit Netzwerkelementen von gleichen sowie von unterschiedlichen Herstellern eingesetzt wird.

## Claims

1. Method for avoiding ping-pong handovers in mobile telephone networks with a plurality of cells (3, 4), defined by stationary base stations (1, 2) at a distance from each other, and with mobile and/or stationary mobile telephone stations (6) such as e.g. mobile telephones located within transmitting and receiving range of the base stations (1, 2), wherein repeated unwanted handovers of a mobile telephone station (6) in its connected/active mode when a connection is made from a source base station (1 or 2) to a destination base station (2 or 1) are avoided by a handover method, and between the mobile telephone stations (6) and the base stations (1, 2) system messages are also transmitted to start the handover method, wherein information on handover methods is transmitted in the system messages for starting the handover method, and by means of this information optimum operating parameters of the mobile telephone stations (6) and/or of at least one of the base stations (1, 2) involved are determined and set automatically by the mobile telephone stations (6) and/or by at least one of the base stations (1, 2) involved, **characterised in that** historical information on handover methods already carried out is used as the information, wherein the historical information includes the reason for the handover requests of a base station (1, 2) such as receiving and/or transmitting field strength (7, 9) of the mobile telephone station (6) and/or of the base stations (1, 2) and the frequency of handover requests of a base station per unit of time, and **in that** the optimum operating parameters of the mobile telephone stations (6) and/or of at least one of the base stations (1, 2) involved include differential values (11) with hysteresis tolerances of the receiving and/or transmitting field strengths (7, 9) of the mobile telephone stations (6) and/or of at least one of the base stations (1, 2) involved, wherein the optimum hysteresis tolerances of the mobile telephone stations (6) are set.

2. Method according to claim 1, **characterised in that** the historical information includes the codes of the base station (1 or 2) last requesting handover.

3. Method according to one of claims 1 or 2, **characterised in that** the optimum operating parameters of the mobile telephone stations (6) and/or of at least one of the base stations (1, 2) involved include predefined upper and/or lower absolute values of the receiving and/or transmitting field strengths (7, 9) which in particular are set in the corresponding handover-triggering network elements (6).

4. Method according to one of claims 1 to 3, **characterised in that** the optimum operating parameters of the mobile telephone stations (6) include RRM (radio resource management) parameters which in particular are set by the mobile telephone stations (6).

5. Method according to one of claims 1 to 4, **characterised in that** the mobile telephone network (3, 4) is a GSM, UMTS or LTE mobile telephone network or equivalent mobile telephone network e.g. WiMAX.

6. Method according to one of claims 1 to 5, **characterised in that** the method is used in networks (3, 4) with network elements from the same and from different manufacturers.

## Revendications

1. Procédé pour éviter un transfert ping-pong dans des réseaux de téléphonie mobile avec une multiplicité de cellules radio (3, 4) définies par des stations de base stationnaires (1, 2) espacées les unes des autres, et avec des stations de téléphonie mobile (6) stationnaires et/ou mobiles, comme par exemple des téléphones mobiles, qui se trouvent dans la zone d'émission et de réception desdites stations de base (1, 2), étant précisé que des transferts indésirables répétés d'une station de téléphonie mobile (6) dans son mode connecté/actif, en présence d'une communication établie, d'une station de base source (1 ou 2) vers une station de base cible (2 ou 1) sont évités grâce à un procédé de transfert, et que des messages de système sont aussi transmis entre les stations de téléphonie mobile (6) et les stations de base (1, 2) pour démarrer le procédé de transfert, et étant précisé que dans les messages de système pour démarrer le procédé de transfert, des informations pour celui-ci sont transmises, et qu'à l'aide de ces informations, des paramètres de fonctionnement optimaux des stations de téléphonie mobile (6) et/ou de l'une au moins des stations de base (1, 2) impliquées sont déterminés et réglés automatiquement par les stations de téléphonie mobile (6) et/ou par l'une au moins des stations de base (1, 2) impliquées, **caractérisé en ce qu'**on utilise comme informations des informations historiques sur des procédés de transfert déjà effectués, étant précisé que les informations historiques contiennent la raison des demandes de transfert d'une station de base (1, 2) telles que l'intensité de champ de réception et/ou d'émission (7, 9) de la station de téléphonie mobile (6) et/ou des stations de base (1, 2), et la fréquence des demandes de transfert d'une station de base par unité de temps, et **en ce que** les paramètres de fonctionnement optimaux des stations de téléphonie mobile (6) et/ou de l'une au moins des stations de base (1, 2) impliquées contiennent des valeurs différentielles (11) avec des tolérances d'hystérésis des intensités de champ de réception et/ou d'émission (7, 9) des stations de téléphonie mobile (6) et/ou de l'une au moins des stations de base (1, 2) impliquées, les tolérances d'hystérésis optimales des stations de téléphonie mobile (6) étant réglées.

2. Procédé selon la revendication 1, **caractérisé en ce que** les données historiques contiennent les identifications de la station de base (1 ou 2) qui a demandé le transfert en dernier.

3. Procédé selon l'une des revendications 1 ou 2, **caractérisé en ce que** les paramètres de fonctionnement optimaux des stations de téléphonie mobile (6) et/ou de l'une au moins des stations de base (1, 2) impliquées contiennent des valeurs absolues supérieures et/ou inférieures prédéfinies des intensités de champ de réception et/ou d'émission (7, 9) qui sont réglées en particulier dans les éléments de réseau (6) déclenchant le transfert correspondant.

4. Procédé selon l'une des revendications 1 à 3, **caractérisé en ce que** les paramètres de fonctionnement optimaux des stations de téléphonie mobile (6) contiennent des paramètres RRM (Radio Ressource Management) qui sont réglés en particulier par les stations de téléphonie mobile (6).

5. Procédé selon l'une des revendications 1 à 4, **caractérisé en ce que** le réseau de téléphonie mobile (3, 4) est un réseau de téléphonie mobile GSM, UMTS ou LTE ou un réseau de téléphonie mobile équivalent, par exemple WiMAX.

6. Procédé selon l'une des revendications 1 à 5, **caractérisé en ce qu'**il est mis en ouvre dans des réseaux (3, 4) avec des éléments de réseau des mêmes fabricants ou de fabricants différents.
